Europäisches Patentamt

European Patent Office

Office européen des brevets

(11) Numéro de publication: **0 195 933**
A2

(12) **DEMANDE DE BREVET EUROPEEN**

(21) Numéro de dépôt: **86102160.8**

(22) Date de dépôt: **19.02.86**

(51) Int. Cl.⁴: **F 16 K 25/00**

(30) Priorité: **27.02.85 FR 8502863**

(43) Date de publication de la demande: **01.10.86**
**Bulletin 86/40**

(84) Etats contractants désignés: **DE GB IT**

(71) Demandeur: **EG & G SEALOL: Société à Responsabilité Limitée dite, 18ter, rue des Osiers Coignieres, F-78310 Maurepas (Yvelines) (FR)**

(72) Inventeur: **Villeneuve, Michel, 26, rue du Coquet, F-27950 Saint Marcel (Eure) (FR)**

(74) Mandataire: **Simonnot, Bernard et al, Cabinet Simonnot 49, Rue de Provence, F-75442 Paris Cédex 09 (FR)**

(54) **Portée d'étanchéité pour robinet à clapet.**

㊼ L'invention a trait au domaine des robinets à clapet.

La portée d'étanchéité selon l'invention est essentielle-ment caractérisée en ce que le siège (4) et le clapet (5) du robinet sont réalisés sous la forme de pièces usinées massives en un alliage à base de nickel et sensiblement exempt de cobalt, rapportées respectivement sur le corps (1) et la tige (6) du robinet, le siège présentant une dureté au moins égale à celle du clapet.

Application aux robinets à clapet destinés à fonctionner dans des conditions sévères de température et de pression, notamment dans les centrales nucléaires.

## "PORTEE D'ETANCHEITE POUR ROBINET A CLAPET"

La présente invention concerne une portée d'étanchéité pour robinet à clapet, applicable plus particulièrement aux robinets destinés à fonctionner dans des conditions sévères de température et de pression, notamment dans les circuits de refroidissement à l'eau de centrales nucléaires. L'invention couvre également les robinets à clapet munis de ladite portée d'étanchéité.

Dans le domaine des centrales nucléaires en particulier, on sait que la sécurité et la fiabilité constituent des soucis majeurs permanents, et des efforts constants sont engagés pour améliorer les équipements et les procédures d'exploitation.

En ce qui concerne les robinets, on en utilise des milliers dans divers circuits, notamment de refroidissement à l'eau, desdites centrales nucléaires et c'est pourquoi ils sont une contribution essentielle pour un fonctionnement sûr et fiable d'une centrale. Or, bien que l'étanchéité entre la tige et le corps d'un robinet soit satisfaisante à l'heure actuelle, il existe toujours des difficultés à obtenir une fiabilité totale des portées d'étanchéité de la jonction siège-clapet.

Les règles de conception spécifient que ces portées d'étanchéité soient revêtues d'un dépôt dur. En majorité, la robinetterie en service met en oeu-

2

vre des revêtements durs à base nickel ou cobalt, ce dernier étant largement utilisé pour les applications nucléaires.

Les alliages de rechargement à base cobalt se comportent correctement mais avec certains inconvénients qui demandent à être éliminés si l'on veut accroître la sécurité et la fiabilité :

- dureté superficielle non homogène, quelles que soient les caractéristiques physiques du matériau de base pour le rechargement et le procédé de revêtement : on obtient environ 50 % de dispersion sur la dureté mesurée, ce qui conduit à des dépôts soit trop ductiles  soit trop durs ;

- ce type de revêtement est très sensible à la fissuration sous les charges élevées du contact siège sur clapet. Ce phénomène est encore plus marqué lorsque le matériau support est relativement mou, tel qu'un acier inoxydable austénitique souvent utilisé en nucléaire : la fissuration du dépôt conduit à de grosses fuites très au delà des limites acceptables ;

- malgré leur faible taux de corrosion et les petites quantités utilisées, les alliages à base cobalt peuvent entrer pour une part significative du taux de Co60 dans le décompte total des isotopes radioactifs à longue durée de vie dans les produits de corrosion rencontrés dans les réacteurs refroidis à l'eau.

Il est clair que la technique de rechargement ne convient pas pour les applications envisagées dans la présente invention. A cet égard, on connait par exemple le brevet britannique N° 277 381 décrivant une portée d'étanchéité destinée aux détendeurs et mettant plus spécialement l'accent sur

3

les propriétés antidéflagrantes des matériaux utilisés et leur combinaison pour les gaz combustibles et l'oxygène. A cet effet, ce brevet prévoit une augmentation de la dureté par traitement dans un bain de brasure. Or la présente invention permet précisément d'éviter la technique par rechargement.

On connait également le brevet britannique N° 670 249 décrivant un robinet dont au moins l'un des éléments de la portée d'étanchéité est réalisé en acier durci superficiellement, l'autre élément de portée étant réalisé en un alliage d'aluminium ou en Monel. Les duretés ainsi obtenues sont notablement insuffisantes pour les applications visées par la présente invention, celle-ci éliminant en outre les traitements superficiels en faveur de traitements à coeur.

La présente invention vise donc à remédier aux divers inconvénients ci-dessus, en fournissant une portée d'étanchéité fiable et de réalisation aisée, amenant une économie substantielle aussi bien sur la matière que sur le temps et l'énergie nécessaires à sa fabrication ainsi qu'à celle des robinets qui en sont munis.

Conformément à l'invention, le siège et le clapet du robinet sont réalisés sous la forme de pièces usinées massives en un alliage à base de nickel, sensiblement exempt de cobalt, rapportées respectivement sur le corps et la tige du robinet, le siège présentant une dureté au moins égale à celle du clapet.

Une telle structure de l'ensemble siège-clapet, tout en éliminant les inconvénients dus au cobalt, permet de réaliser directement par usinage les pièces présentant leurs dimensions, leur

4

géométrie et leur état de surface définitifs. Les duretés étant obtenues par traitement thermique séparé, après usinage des pièces et antérieurement à leur mise en place, aucune opération d'usinage complémentaire après montage, ni aucun apport thermique sur des pièces importantes ne sont nécessaires comme dans le cas de la technique par rechargement.

D'autres caractéristiques et avantages de l'invention ressortiront mieux de la description qui va suivre, faite en regard des dessins annexés sur lesquels :

la figure 1 représente une vue schématique en coupe de la partie d'un robinet comportant un siège et un clapet ; et

la figure 2 représente une vue schématique partiellement en coupe, à échelle agrandie par rapport à la figure 1, illustrant le montage d'un ensemble siège-clapet selon l'invention.

Sur ces dessins, les mêmes références désignent les mêmes éléments.

En ce qui concerne l'alliage applicable, on donne ci-après, à titre illustratif, la composition des alliages à base cobalt et à base nickel destinés à la technique de rechargement, ainsi que la composition essentielle et les propriétés intéressantes d'un alliage à base nickel préféré selon l'invention. Ces compositions sont données en pourcentage en poids.

I - <u>Alliages de rechargement</u>

|         | base Co | base Ni |
|---------|---------|---------|
| chrome  | 29      | 16      |
| carbone | 1,4     | 0,7     |

|  | base Co | base Ni |
|---|---|---|
| silicium | 1,4 | 4,2 |
| molybdène | ⩾1 | - |
| fer | ⩾3 | 4 |
| nickel | ⩾3 | q.s.p. 100 |
| cobalt | q.s.p. 100 | - |
| tungstène | 8 | - |
| Dureté Rockwell C (HRC) | 41 | 54 |

II - Alliage pour pièces massives

| nickel | 50 à 55 |
|---|---|
| chrome | 17 à 21 |
| columbium | 4,75 à 5,50 |
| molybdène | 2,80 à 3,30 |
| titane | 0,65 à 1,15 |
| aluminum | 0,20 à 0,80 |
| cobalt | ⩽1,0 |
| carbone | ≃0,08 |
| Dureté Rockwell C (HRC) | 20 à 40 * |
| Coefficient de dilatation linéaire ($10^{-6}$/°C) | 13,9 |
| Module de Young E ($10^3$MPa) | 210 |
| Limite élastique à 0,2% R 0,2(MPa) | 11,2 à température ambiante / 10,9 à 450°C |

(*) en fonction du temps de vieillissement.

L'alliage II ci-dessus peut être par exemple choisi dans la gamme vendue dans le commerce sous l'appellation "Inconel", en particulier "Inconel 718".

Un tel alliage présente notamment les propriétés avantageuses suivantes :
- matériau sans cobalt (moins de 1%),
- dureté obtenue 20 à 40 HRC suivant le traitement thermique,

6

- résistance à la corrosion équivalente ou supérieure à celles de revêtements base cobalt,
- résistance aux températures élevées : modification de 2,7 % seulement de la limite élastique à 450°C.

En ce qui concerne le comportement thermique, on obtient sur le clapet, le siège et le corps, des coefficients de dilatation voisins :
- alliage base nickel : $14 \times 10^{-6}$/°C
- acier inoxydable (corps) : $16 \times 10^{-6}$/°C

Avec les valeurs ci-dessus, la différence de dilatation est de seulement 0,011 mm par 100°C d'élévation de température pour un robinet de 50 mm de diamètre de passage.

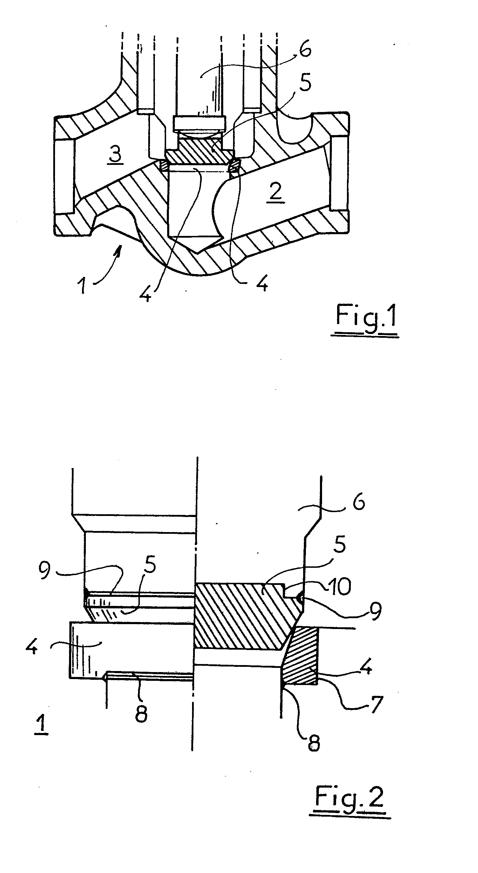

En se référent aux figures 1 et 2, le corps 1 d'un robinet comporte de façon connue en soi une voie d'entrée 2 et une voie de sortie 3 pouvant être isolées par l'intermédiaire d'un siège 4 sur lequel prend appui un clapet 5 disposé à l'extrémité d'une tige de commande appropriée 6, elle-même rendue étanche par rapport au reste du corps de robinet au moyen par exemple d'un soufflet métallique (non représenté).

Conformément à l'invention, le siège 4 est monté serré dans un logement 7 du corps 1 et solidarisé par soudure selon un cordon 8 par tout procédé approprié, de préférence sans apport de métal selon le procédé à électrode de tungstène sous atmosphère inerte. Le clapet 5 est rapporté de la même façon dans un logement 10 de l'extrémité de la tige 6 selon un cordon 9. Du fait de la faible différence dans les coefficients de dilatation entre le siège et le clapet d'une part et le corps de robinet d'autre part, les cordons de soudure ne sont pas soumis à une contrainte excessive et peuvent supporter une température d'utilisation de 450°C ainsi que les chocs thermiques sans fissuration ou autre dégradation.

Comme mentionné plus haut, le siège 4 présente une dureté au moins égale à celle du clapet 5. Avantageusement, la dureté du siège est de 40 HRC et celle du clapet de 30 HRC, de préférence avec une tolérance de ± 2 HRC dans des conditions de service impliquant une température maximale de 450°C et une pression nominale du fluide de 259 bars. La différence de dureté indiquée ci-dessus permet d'assurer un contact optimal, le clapet étant le plus ductile ce qui lui permet de se conformer au mieux à la géométrie du siège.

Pour l'obtention des duretés ci-dessus, on effectue un traitement thermique approprié sur les pièces usinées. A titre d'exemple, avec l'alliage "Inconel 718", ce traitement comprend un stade commun de "mise en solution", effectué sous vide entre 800 et 1000°C pendant plusieurs heures, suivi d'un refroidissement lent au four. Un second stade consiste en un vieillissement à coeur effectué à 718°C sous vide, pendant vingt heures pour obtenir 40 HRC sur le siège et pendant deux heures pour obtenir 30 HRC sur le clapet.

Le contrôle des pièces avant mise en place comprend des relevés de circularité, d'état de surface et d'angle des portées coniques suivant les critères suivants :

- circularité : 0,02 mm
- état de surface : Ra < 1,6 μm
- angle : ± 0,2°

Le cordon de soudure du siège est ensuite soumis à un essai d'étanchéité à l'hélium sous vide.

8

Après mise en place du clapet et du siège, aucune opération d'usinage n'est nécessaire ; on obtient ainsi un avantage essentiel par rapport aux revêtements où une longue suite d'opérations est nécessaire de par l'important apport thermique sur les pièces : usinage ébauche, dépôt, traitement thermique de détensionnement, usinage du dépôt pour contrôle par ressuage, usinage final, rodage, contrôle final.

De plus, la mise en place du clapet et du siège se faisant sur pièces finies, les réparations des portées sont envisageables par simple remplacement de ces pièces rapportées.

Les exemples suivants rendent compte d'essais effectués sur éprouvettes et sur robinet complet, et feront mieux saisir la portée et l'intérêt de l'invention.

Exemple 1

- sur éprouvette : deux jeux d'échantillons ayant la configuration exacte des portées d'étanchéité ont été fabriqués et soumis à des essais de charge, d'étanchéité et de choc thermique.

a) force de contact : la force minimum de contact (Fc) permettant de maintenir les portées en contact sous la pression de service de 259 bars est de 5500 daN.

A l'aide d'un vérin hydraulique, des charges de 6400 daN (1,16 x Fc) et 11000 daN (2 x Fc) ont été appliquées cinq fois au clapet et siège. L'examen des pièces après essais indique une zone de contact uniforme de 1 mm environ de largeur et aucun signe de détérioration des surfaces(fissures, pénétrations, etc.).

b) étanchéité : sous charge de 6400 daN au niveau des portées d'étanchéité, la pression nominale de service de 259 bars a été appliquée en dessous du clapet. Aucune fuite d'eau n'a été observée pendant 15 minutes.

c) choc thermique : un échantillon a été soumis pendant cinq cycles successifs à des chocs thermiques de la température ambiante à 500°C et retour à l'ambiante (15 minutes à 500°C, immersion dans l'eau froide). Après ces cycles thermiques, l'échantillon a été soumis à un contrôle d'étanchéité à l'hélium sous vide et à une inspection visuelle avec grossissement. Aucun signe indiquant une fissuration n'a été relevé.

Exemple 2

- sur robinet complet (clapet de diamètre nominal 50 mm) : après assemblage final, les robinets ont été installés au banc d'essai et un couple de serrage appliqué au volant de manoeuvre jusqu'à ce que l'étanchéité soit obtenue à la pression de service de 259 bars. Le couple nécessaire a été relevé à 15 m daN. L'essai a été reconduit cinq fois avec des résultats homogènes. L'examen des portées après essai n'a pas indiqué de quelconque détérioration.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre.

1

## REVENDICATIONS

1. Portée d'étanchéité pour robinet du type à clapet portant sur un siège et destiné à fonctionner dans des conditions sévères de température et de pression, caractérisée par le fait que le siège (4) et le clapet (5) sont réalisés sous la forme de pièces usinées massives en un alliage à base de nickel et sensiblement exempt de cobalt, rapportées respectivement sur le corps (1) et la tige (6) du robinet, le siège présentant une dureté au moins égale à celle du clapet.

2. Portée d'étanchéité selon la revendication 1, caractérisée par le fait que le siège et le clapet sont rapportés dans des logements respectifs (7, 10) du corps et de la tige et solidarisés par des cordons de soudure (8,9) sans apport de métal.

3. Portée d'étanchéité selon l'une des revendications 1 ou 2, caractérisée par le fait que le siège et le clapet sont réalisés dans le même alliage et que leur dureté respective résulte d'un traitement de vieillissement après usinage.

4. Portée d'étanchéité selon l'une quelconque des revendications 1 à 3, caractérisée par le fait que la dureté du siège est de 40 Rockwell C et celle du clapet de 30 Rockwell C, avec une tolérance de plus ou moins 2 Rockwell C.

5. Robinet à clapet comportant une portée d'étanchéité selon l'une quelconque des revendications 1 à 4.

0195933

Fig.1

Fig.2